# EUROPEAN PATENT APPLICATION

(11) **EP 0 668 171 A1**
(43) Date of publication of application: **23.08.1995**
(21) Application number: 94925017.9
(22) Date of filing: 26.08.1994
(51) Int. Cl.: B60B 3/04, B60B 21/00, B60B 23/00, B60B 25/02

(54) **LIGHT-ALLOY VEHICULAR WHEEL**

(30) Priority: 16.09.1993 JP 230138/93
(71) Applicant: WASHI KOSAN CO., LTD., Nihonbashi, Chuo-ku, Tokyo 103 (JP)
(72) Inventor: ONO, Kotaro, Fukui 910 (JP); YOSHIMURA, Katsunori, Toyama 933-03 (JP)
(74) Representative: Fleuchaus, Leo, Dipl.-Ing.
(86) International application number: JP9401420
(87) International publication number: WO9507826

(57) **Abstract**

This invention provides a light-alloy vehicular wheel. In this light-alloy vehicular wheel, a forged material or a cast and forged material is used for at least a disc (1, 6, 13) and a rim (5, 7, 8) or an inner rim member (3), which is produced separately from the disc, is jointed with the disc (1, 6, 13) by a friction grip jointing method. It is possible to joint a unitary molded product consisting of an outer rim member (2, 12) and disc (1, 13) and composed of forged light alloy or cast and forged light alloy with the inner rim member (3) of cast light alloy by a friction welding method, and joint a unitary molded product consisting of outer and inner rim members and constituting a rim (5) of a cast light alloy with a disc (6) of a forged light alloy by a friction welding method. A primary body (8) of the inner rim member can also be spin molded by molding outer and inner rim members unitarily by a casting method.

## Description

### Technical Field

The present invention relates to a light-alloy wheel for vehicles.

### Background Art

As vehicles are increased in number, recently, the proportion of vehicles which are provided with light-alloy wheels is increased. Because of a reduced unspring weight and beauty in the view point of the design, many light-alloy wheels which are mainly made of a light metal such as aluminum or magnesium are used. As the method of producing such wheels, a casting process and a forging process are dominantly employed. Other useful methods include a high-density casting process, and a so-called casting forging process in which a hot forging process is conducted after preform casting. In a working step of the forging process, employed is a spinning process, a pressing process, or the like. Wheels for vehicles are classified into a 1- piece wheel, a 2-piece wheel, a 3-piece wheel, etc. according to the structural feature. Particularly, a 1- piece wheel is excellent in rigidity, functionality, weight, etc.

The technique of producing a wheel by using a forging process has already been established by the techniques of producing a forged 1-piece wheel which were proposed by the applicant in Japanese Patent Publications Nos. 3-2573 and 3-2574.

The structure of a wheel consists of two components, a rim portion (outer and inner rims), and a disk portion. The disk portion has a disk-like shape and is designed so as to have a complex pattern. The rim portion has a drum-like shape and is required to have rigidity against deflection. In order to adequately harmonize the two components with each other, it is preferable to separately produce the rim portion and the disk portion, and thereafter join them together. When an inner rim portion of an integral forged wheel is to be produced, the spinning process is usually employed. However, the portion is produced by conducting plastic deformation in a reduced thickness as small as about 4 to 5 mm. This causes the production process to require a prolonged process period and the yield to be lowered.

When two metal members are to be joined together, a so-called welding process is usually employed in which end faces of the portions to be joined are melted by using an energy source such as electricity or a gas and the end faces are joined to each other after cooling. However, this process has drawbacks that the high temperature heating easily produces strains in the structure and that harmful oxides are likely sealed in the structure. There is another joining process which is called a solid-phase joining. Typical examples of the solid-phase joining include the diffusion joining, the friction pressure joining, the cold joining, the explosion joining, the gas pressure joining, the ultrasonic joining, the hot pressure joining, and the crush welding. According to the spirit of the invention, the friction pressure joining is most suitable in view of the required working period, the easiness of the work, and the sizes of articles to be joined.

A known technique of producing a wheel by using a friction pressure joining process is described in Japanese Patent Publication Laying-Open No. 55-109586. In the known technique, a process of joining a disk portion and a rim portion to each other is conducted in parallel with the rotation axis (line X-X) of a wheel, and the joint portion is located at a position immediately adjacent to an edge of a conical curved surface which is contiguous to a side face of the rim portion. Japanese Patent Publication Laying-Open No. 1-168501 discloses a technique which is characterized in that the joint portions between outer and inner rim portions and a disk portion elongate in a radial direction with respect to the rotation axis of a wheel. Japanese Patent Publication Laying-Open No. 4-334601 asserts a novelty in a joining structure in which an inner rim portion made of a steel product is joined to an outer rim portion and a disk portion which are made of a light alloy. Generally, points which are common to these techniques are mainly directed to the structure of a wheel, easiness of working of a material to be used, and reduction of the production cost.

In the prior art, however, nothing is described about a combination of joined members in which the reduction of the unspring weight and toughness of a material are considered with respect to the controllability of a vehicle to which wheels for vehicles are attached. Furthermore, the prior art shows no concern for the maintenance of the quality and the required production period.

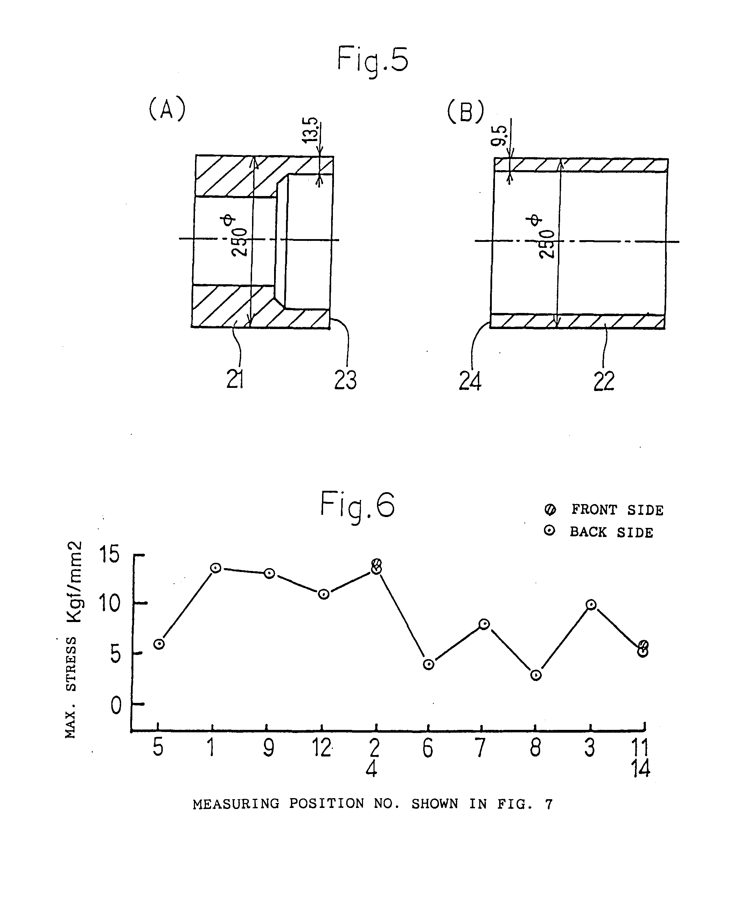

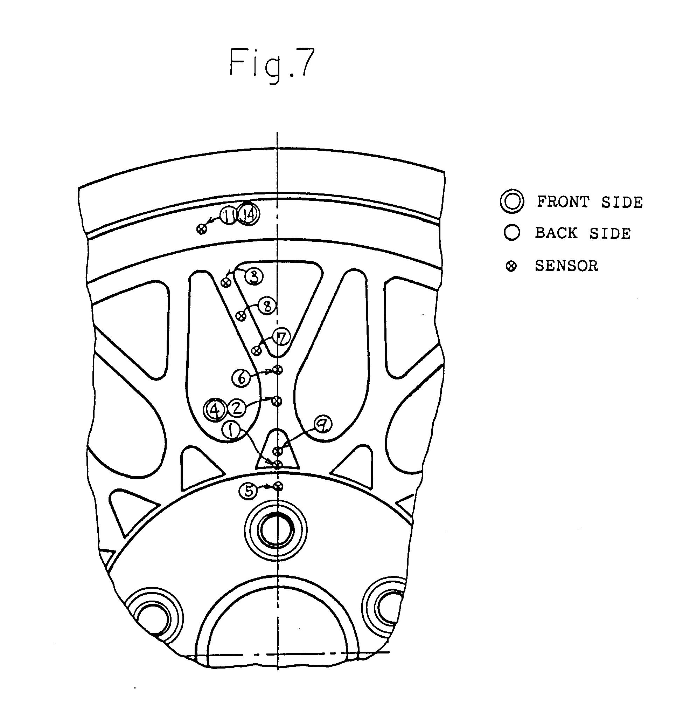

In view of the above, a simulation test in which a bending moment of 337 Kgf-m is applied was conducted on light-alloy wheels for vehicles which has a disk portion bearing a design pattern, to see how stress distributes during a running operation. Fig. 6 shows an example of results, and Fig. 7 shows positions where strain gauges were attached. From the results, it will be seen that a larger stress is generated in a disk portion. In the selection of a material of a member constituting disk and rim portions, therefore, in order to attain properties comparable to those of a conventional forged wheel, it is preferable to employ a process such as a casting forging process, or a high-pressure casting process represented by a squeeze casting process and a non-pored die-casting process, and selectively use a quality of a light-alloy cast member which is superior in strength than a usual casting light alloy material. However, it will be seen that at least a disk portion is preferably produced by a forging process, or a casting forging process.

### Disclosure of the Invention

It is an object of the invention to provide a light-alloy wheel for vehicles having a novel structure in which a member produced by a forging process, or a casting forging process is used at least for a disk portion, outer and inner rim portions, or an inner rim portion are separately worked and these members are then joined together.

According to the invention, in a light-alloy wheel for vehicles, (1) a light-alloy cast member in which an outer rim portion and a disk portion are integrally molded, and an inner rim portion which is made by casting a light alloy are joined to each other by a friction pressure joining process. According to the invention, in a light-alloy wheel for vehicles, (2) a member in which an outer rim portion and a disk portion are integrally molded is produced by a casting forging process according to a pressurization, such as a squeeze casting process, a non-pored die-casting process, or a forging cast process, and the members are joined to a cast inner rim member in the same manner as the (1) above.

According to the invention, furthermore, (3) an outer rim portion, and a disk portion which is formed by casting a light alloy are joined so as to be integrated with each other, by a friction pressure joining process.

According to the invention, furthermore, (4) a raw member which will be formed as an outer rim portion and an inner rim portion or an inner rim portion is formed by casting a light alloy, and an outer and inner rim member or an inner rim member in which the outer rim portion and the inner rim portion, or the inner rim portion are integrally molded after forging by a roll molding process such as a spinning process is joined to a forged disk portion by a friction pressure joining process in the same manner as the (3) above.

According to the invention, furthermore, (5) an integrated light-alloy wheel is obtained in which the joint portion is made thick in order to compensate for reduction of strength of a member due to heat generated in the friction pressure joining process.

The forged disk portion has a metallographic structure having grain flows directed from the center portion to the peripheral portion, the grain flows elongating to an interface extending to the joining face.

In the joining, among solid-phase joining processes, a friction pressure joining process is most advantageous because of the following reasons that the articles to be joined are rotation bodies, that, since the heat generation occurs at the same time in the whole of the joint portion and the temperature is lower by about 20 % than a usual welding process, thermal deformation is prevented from occurring, and that the process period is very short or several tens of seconds.

In the thus configured light-alloy wheel for vehicles, a forged member having a tough metallographic structure is used in the disk portion which must bear a larger stress, and hence the strength of the wheel can be maintained. Since an integrated wheel can be obtained by a friction pressure joining process, the disk portion and the inner rim portion, or an outer rim portion can separately be produced so that a difficult step such as a forging step is eliminated. The employment of a casting forging process reduces a cost of designing various patterns of the disk portion, and improves the material yield, whereby the production cost of the light-alloy wheel for vehicles can be suppressed.

### Brief Description of the Drawings

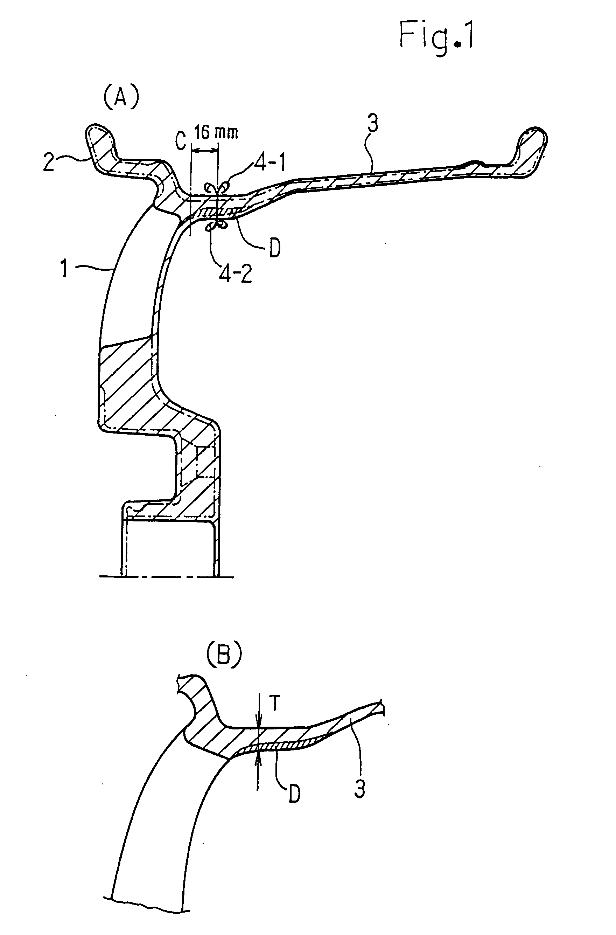

A of Fig. 1 is a half section view showing an embodiment of the light-alloy wheel for vehicles according to the invention, and B is an enlarged view of a part of the embodiment.

Fig. 2 is a half section view showing another embodiment of the light-alloy wheel for vehicles according to the invention.

Fig. 3 is a section view showing a state where an outer rim portion and a raw member which will be formed as an inner rim portion are subjected to a spinning process.

Fig. 4 is a half section view showing a preforming casting process in which a disk portion and an outer rim portion are produced by a casting forging process.

A and B of Fig. 5 are section views of test pieces which were used in a test for demonstrating the coupling state of a friction pressure joining process.

Fig. 6 is a diagram showing a graph of stress distribution in a running simulation of a light-alloy wheel for vehicles which has a disk portion bearing a design pattern.

Fig. 7 is a plan view showing a part of a wheel disk portion and indicating measuring positions shown in the graph of Fig. 6.

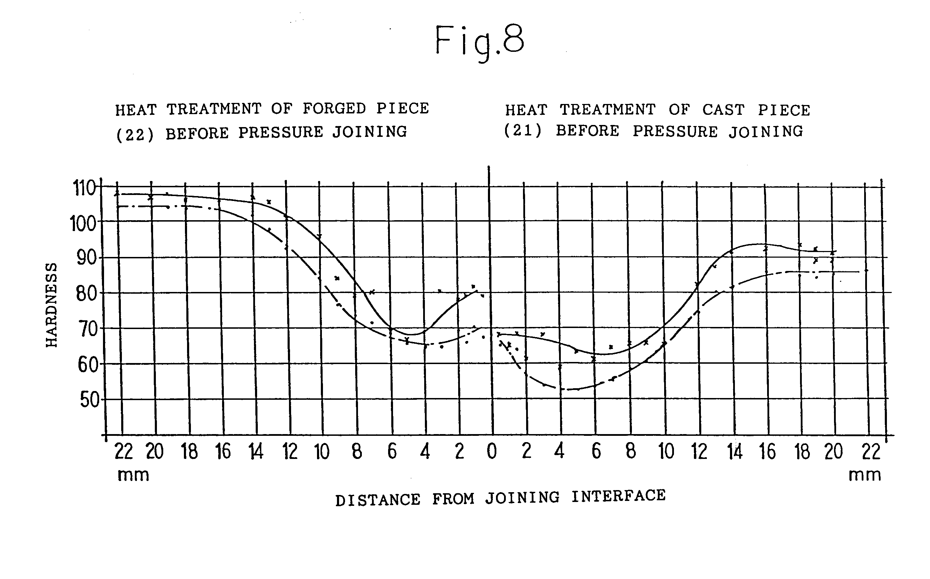

Fig. 8 is a diagram showing a graph in which the hardness of the test pieces obtained by subjecting the test pieces of Fig. 5 to a friction pressure joining process is plotted against the distance from the joint interface.

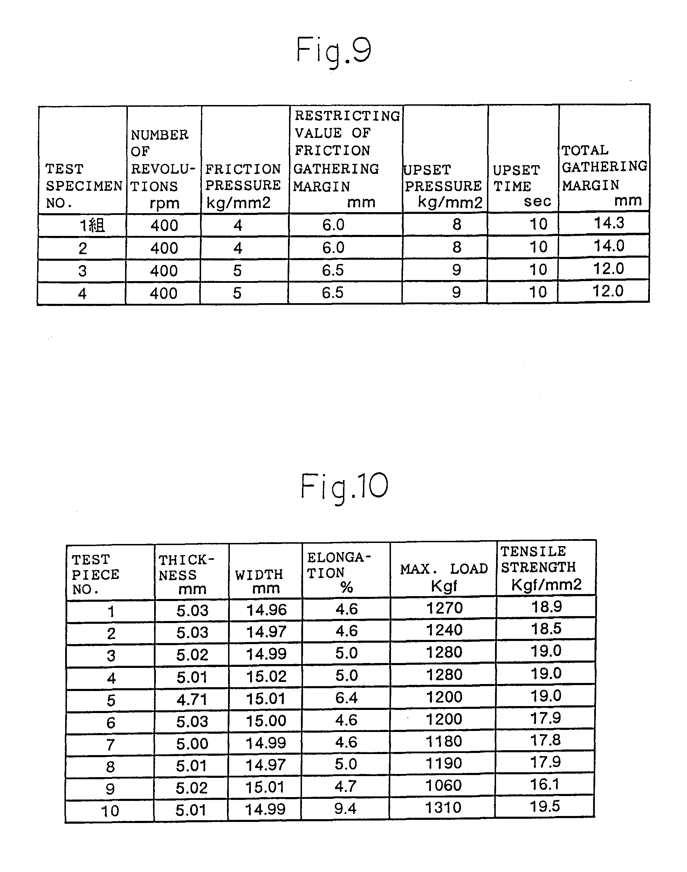

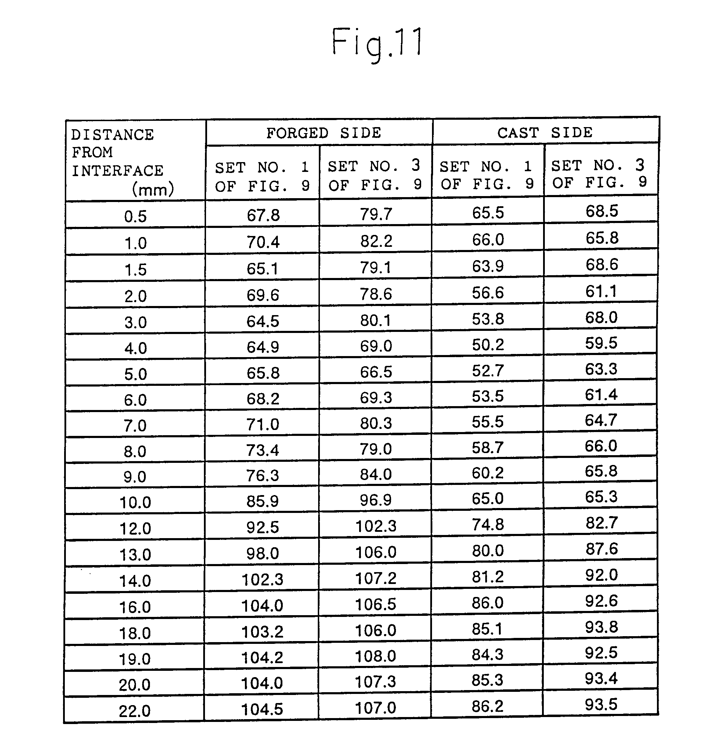

Fig. 9 is a table showing test conditions of test specimens produced in the dimensions shown in Fig. 5.

Fig. 10 is a table showing results of measurements in which tensile strength of test pieces produced from test specimens undergone the friction pressure joining process were measured.

Fig. 11 is a table showing measured values of experiments which checked the distance range from the pressure joining center where hardness change was observed.

### Best Modes for Carrying Out the Invention

### Embodiment 1

First, a proof test of the joint state of a friction pressure joining process was conducted. As a material, test pieces which have a shape such as those shown in A and B of Fig. 5 were used. In A, 21 indicates a cast piece subjected to a heat treatment and made of AC4C-T6. The conditions of the heat treatment were as follows: As a solution treatment, a heating was conducted at 530 _{°} C for 8 hours, and an aging treatment was conducted at 170 _{°} C for 4 hours after water cooling. In B, 22 indicates a forged piece subjected to a heat treatment and made of A6061-T6. As a solution treatment, a heating was conducted at 525 C for 1 hours, and an aging treatment was conducted at 180 _{°} C for 8 hours after water cooling. 23 and 24 indicate joining faces of the test pieces. The joining faces 23 and 24 are rotated about the center lines (one-dot chain lines).

Four sets of the friction pressure joining test pieces in the dimensions shown in Fig. 5 were produced to be used as test specimens. Fig. 9 shows test conditions of each test specimen set. Then test pieces of a width of 15 mm and a thickness of 5 mm were produced from the test specimens subjected to a friction pressure joining process, and the tensile strength of the joint portions were measured. The results are shown in Fig. 10. In a light-alloy wheel, the elongation which is indicated in the table of Fig. 10 is desired to have a value of about 5 %. With respect to this point, first, the test pieces are judged to be "no problem". The test pieces shown in Fig. 10 were previously subjected to a heat treatment, and, after the friction pressure joining process, they were not subjected to a further heat treatment.

The range of the heat-affected zone was judged by checking the range which is centered at the pressure joint portion and in which hardness change is observed. The influence of heat generated in the friction pressure joining process on the periphery of the pressure joint portion was investigated by measuring the hardness of the periphery. The measured distribution state is shown in the form of a graph in Fig. 8. In Fig. 8, the measured values listed in the table of Fig. 11 are plotted. The unit of hardness is of micro Vickers.

As shown from Fig. 8, judging from abrupt changes in hardness in both the cast and forged pieces, it is seen that a range extending from the joint interface and a position separated therefrom by about 15 mm was affected by heat. When an outer rim portion, a disk portion, etc. of a light-alloy wheel are to be joined to an inner rim portion, therefore, it is preferable to conduct joining at a position which is separated from the outer rim portion or the disk portion by at least 15 mm.

### Embodiment 2

Fig. 1A is a section view of the light-alloy wheel for vehicles according to the invention in a friction pressure joining process. Fig. 1 B shows an enlarged portion of the wheel. In Fig. 1A, a section of a completed wheel obtained by machining is shown by broken lines. In the embodiment, a disk portion 1 and an outer rim portion 2 were integrally molded by a forging process, and made of A6061-T6. An inner rim portion 3 was produced by a casting process, and made of AC4C-T6. The friction pressure joining process was conducted under the conditions which are indicated as specification of test specimen set No. 1 shown in the table of Fig. 9. The joining face was formed at a position which is separated by 16 mm from a position of a dot line C in Fig. 1, whereby the outer rim portion 2 and the disk portion 1 are prevented from being affected by heat. In order to reinforce the joint portion, as shown in Fig. 1 B, a thick portion D was formed in the range of 30 mm so as to be centered at the joint portion. While a conventional forged integral wheel has a thickness of 6 mm, a thickness T of the embodiment was increased by about 20 % or set to be 7.2 mm. 4-1 and 4-2 are burrs which are removed away in the machining process.

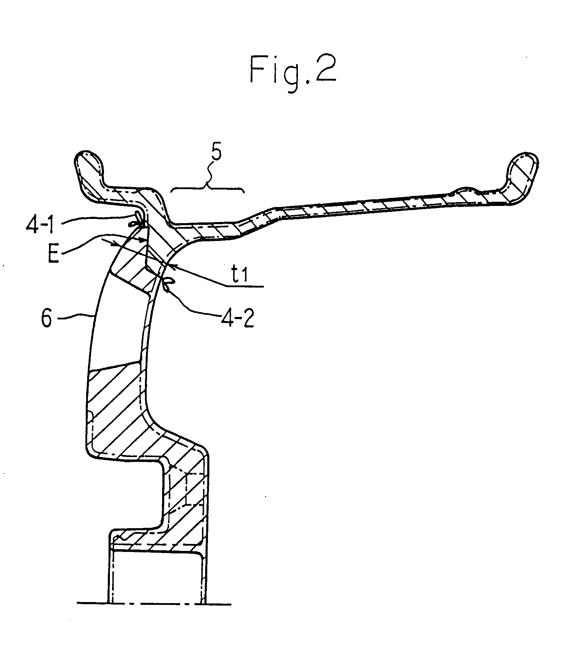

Fig. 2 shows an embodiment in which a rim portion 5 was produced by integrally molding outer and inner rim portions by a casting process, and the rim portion and a forged disk portion 6 were joined together by a friction pressure joining process. In the figure, since ti is affected by heat generated in the friction pressure joining process, t₁ is thickened by 10 % as compared with a conventional product, thereby reinforcing the wheel. The friction pressure joining process was conducted under the conditions conforming to test specimen set No. 4 shown in the table of Fig. 9. However, the number of rotation was changed so as to attain the same speed of the press joining face. The press joining face has an L-shaped section which is directed in the direction of the gathering margin of the friction pressure joining (which is parallel with the rotation axis).

### Embodiment 3

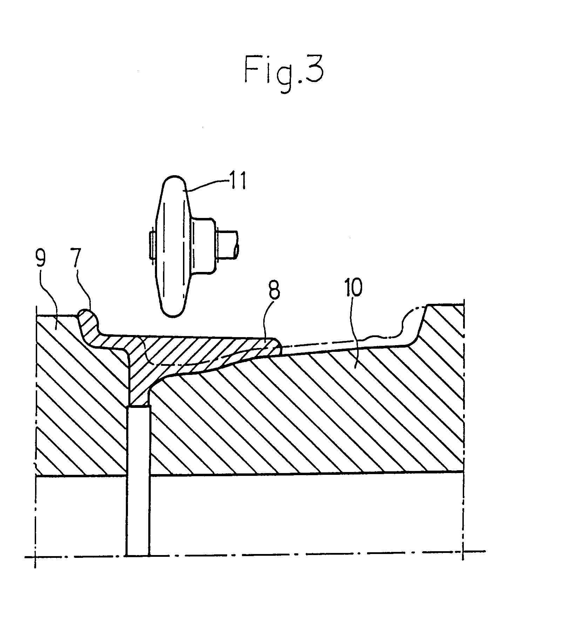

In Fig. 3, an outer rim portion 7 and a raw member 8 of an inner rim portion were integrally cast. The cast portions were heated to about 400 _{°}C, and clamped by mandrels 9 and 10 of a spinning machine. While rotating the portions, the raw member 8 of the inner rim portion was spread by a roller 11 to mold the inner rim portion indicated by a one-dot chain line so that the outer and inner rim portions are integrally formed. The portions were then friction-joined to a forged disk in the same manner as described above.

### Embodiment 4

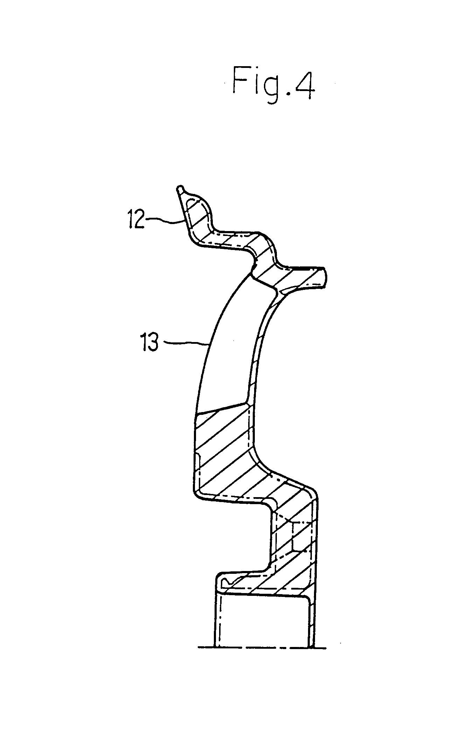

The embodiment is an embodiment based on a casting forging process. As shown in Fig. 4, first, an outer rim portion 12 and a disk portion 13 were integrally cast to form a preform. As the material, used was an Al-Si eutectic alloy to which Mg and Cu were added. After conducting a fluorescent penetration inspection, the preform was heated and then subjected to a hot forging process. The embodiment has an advantage that a crude mold is not required and the forging cost can remarkably be reduced as compared with a forging process starting from billets. In the case of employing a casting forging process, furthermore, the disk portion may be designed so as to attain a mesh structure which has a high degree of freedom and is fine. After the hot forging process, a trimming process was conducted. After a heat treatment of T6, an inner rim portion was joined by a friction pressure joining process in the same manner as Embodiment 2.

### Industrial Applicability

In the light-alloy wheel for vehicles according to the invention, a forged member having a tough metallographic structure is used in the disk portion which must bear a larger stress, whereby the strength of the wheel can be maintained. The light-alloy wheel for vehicles according to the invention can be obtained in the form of an integrated wheel produced by a friction pressure joining process. Therefore, the disk portion and the inner rim portion, or the outer rim portion can separately be produced so that a difficult step such as a forging step is eliminated. According to the invention, furthermore, the employment of a casting forging process can reduce a cost of designing various patterns of the disk portion, and improve the material yield, whereby the production cost of the light-alloy wheel for vehicles can be suppressed.

## Claims

1. A light-alloy wheel for vehicles which has an outer rim portion, an inner rim portion and a disk portion, wherein
said wheel comprises a forged light-alloy member in which said outer rim portion and said disk portion are integrally molded, and an inner rim member which is made by casting a light alloy and which is joined to said forged light-alloy member by a friction pressure joining process to be integrated with said forged light-alloy member.

2. A light-alloy wheel for vehicles according to claim 1, wherein
said member in which said outer rim portion and said disk portion are integrally molded is produced by subjecting a light alloy to a casting forging process.

3. A light-alloy wheel for vehicles which has an outer rim portion, an inner rim portion and a disk portion, wherein
said rim portion and said disk portion which is formed by casting a light alloy are joined so as to be integrated with each other, by a friction pressure joining process.

4. A light-alloy wheel for vehicles according to claim 3, wherein
a raw member which will be formed as said outer rim portion and said inner rim portion is made of a cast light-alloy member, and, after a forging process, integrally molded by a roll molding process such as a spinning process, as said outer rim portion and said inner rim portion.

5. A light-alloy wheel for vehicles according to claim 1, wherein
a portion which is to be joined by the friction pressure joining process has a thick part in a range extending by at least about 10 mm from a joint interface toward said member to be joined, thereby achieving a structure which can obtain a desired strength.

6. A light-alloy wheel for vehicles according to claim 2, wherein
a portion which is to be joined by the friction pressure joining process has a thick part in a range extending by at least about 10 mm from a joint interface toward said member to be joined, thereby achieving a structure which can obtain a desired strength.

7. A light-alloy wheel for vehicles according to claim 3, wherein
a portion which is to be joined by the friction pressure joining process has a thick part in a range extending by at least about 10 mm from a joint interface toward said member to be joined, thereby achieving a structure which can obtain a desired strength.

8. A light-alloy wheel for vehicles according to claim 4, wherein
a portion which is to be joined by the friction pressure joining process has a thick part in a range extending by at least about 10 mm from a joint interface toward said member to be joined, thereby achieving a structure which can obtain a desired strength.
